# EUROPÄISCHE PATENTSCHRIFT

(11) **EP 1 351 006 B1**
(45) Veröffentlichungstag und Bekanntmachung des Hinweises auf die Patenterteilung: **29.03.2006**
(21) Anmeldenummer: 03001088.8
(22) Anmeldetag: 18.01.2003
(51) Int. Cl.: F16L 37/084

(54) **Aufnahmeteil einer Fluid-Steckkupplung**
Receiving part of a fluid plug-in coupling
Partie réceptrice d'un raccord fluide enfichable

(30) Priorität: 02.02.2002 DE 20201573 U
(43) Veröffentlichungstag der Anmeldung: 08.10.2003
(73) Patentinhaber: Voss Automotive GmbH, 51688 Wipperfürth (DE)
(72) Erfinder: Kaminski, Volker, 58553 Halver (DE); Serdaris, Jannis, 51643 Gummersbach (DE); Terlau, Norbert, 51515 Kürten (DE); Zenses, Frank, 50354 Hürth (DE)
(74) Vertreter: Patentanwälte Dr. Solf & Zapf

(56) Entgegenhaltungen:
- EP-A- 0 379 655
- EP-A- 0 756 125
- DE-A- 19 932 602
- US-A- 5 161 834
- US-A- 5 752 726

## Beschreibung

Die vorliegende Erfindung betrifft ein Aufnahmeteil einer Fluid-Steckkupplung (wobei unter "Fluid" ein beliebiges, hydraulisches oder gasförmiges Strömungsmedium zu verstehen ist) gemäß dem Oberbegriff des Patentanspruches 1.

Eine solche Ausführung eines Aufnahmeteils ist in dem Dokument EP 0 756 125 A1 beschrieben. So ist auch dabei in einem Muffengehäuse ein Halteelement gelagert, welches radial elastisch verformbare Halteabschnitte zum rastenden Hintergreifen einer radialen Haltestufe des Steckerteils aufweist. Ferner ist ein relativ zu dem Muffengehäuse axial verschiebbar gehaltertes Löseelement vorgesehen, welches über Rastmittel am äußeren Umfang des Muffengehäuses gehaltert ist.

Die US-A-5 752 726 beschreibt hingegen keine derartige Verrastung zwischen einem Muffengehäuse und einem Löseelement. Ein in diesem Dokument beschriebenes Löseelement ist als zweiteilige Hülse ausgebildet, wobei die beiden Teile schwenkbeweglich verbunden sind. Die Montage erfolgt deshalb nicht durch axiales Aufstecken und Verrasten, sondern durch ein radiales Zusammenklappen der zwei Teile.

Die EP 0 379 655 A2 beschreibt eine Verbindungsvorrichtung, bel der zwar ein ähnliches Löseelement über Rastmittel am äußeren Umfang des Muffengehäuses gehaltert ist, jedoch fehlt gemäß diesem Dokument das gattungsgemäße Merkmal, dass das Halteelement mit radial elastisch verformbaren Halteabschnitten eine radiale Haltestufe des Steckerteils rastend hintergreift. Im Gegensatz dazu ist diese bekannte Verbindungsvorrichtung zum Einstecken von glattwandigen Rohren konzipiert, indem das Halteelement mit scharfkantigen Haltezungen in die glatte, zylindrische Oberfläche des Rohres eingreift.

Auch die DE 199 32 602 A1 entspricht bezüglich der Halterung des eingesteckten, glattwandigen Rohres der EP 0 379 655 A2. Zusätzlich ist eine Rückstellfeder zwischen dem Gehäuse (Haupthülse) und einem Löseelement (Außenhülse) beschrieben. Diese Rückstellfeder ist in Form einer Federscheibe ausgeführt.

Die EP 0 727 027 B1 beschreibt eine Schnellkupplung, bei der das Löseelement aus einer Inneren Hülse und einer äußeren Hülse besteht. Die innere Hülse wirkt als Löseabschnitt gegen die Halteabschnitte des Halteelementes. Dabei sind zudem an der inneren Hülse Rastvorsprünge gebildet, die sich radial nach außen erstrecken und mit einer inneren Ringkante des Muffengehäuses zusammenwirken. Das Löseelement ist als Kunststoff-Formtell ausgebildet, so dass es wegen der Ausgestaltung der Rastmittel schwierig ist, die Rastvorsprünge formtechnisch herzustellen, well dieser Bereich ja koaxial von der äußeren Hülse umschlossen ist. Deshalb weist die äußere Hülse jeweils in den die Rastvorsprünge radial überdeckenden Bereichen Schlitze für ein Formwerkzeug zum Formen der Rastvorsprünge auf. Dadurch ist die äußere Hülse in mehrere durch die Schlitze getrennte Hülsenbereiche unterteilt, die jeweils einendig mit der inneren Hülse einstückig verbunden sind. Dabei dient die äußere Hülse als Fingergreiffläche, die dazu in axialer Richtung gesehen leicht konkav gewölbt ausgebildet ist.

Der vorliegenden Erfindung liegt die Aufgabe zugrunde, bei einem Aufnahmeteil der genannten Art eine erhöhte Sicherheit gegen ungewolltes Lösen sowie gegen verschmutzungsbedingte Störungen zu erreichen.

Erfindungsgemäß wird dies durch die Merkmale des Patentanspruches 1 erreicht. Weitere vorteilhafte Ausgestaltungsmerkmale der Erfindung sind in den abhängigen Ansprüchen enthalten.

Erfindungsgemäß wird somit durch ein einheitliches Ringelement aus einem elastischen Material eine Doppelfunktion erreicht; es fungiert einerseits als Dichtungselement zur äußeren Schmutzabdichtung sowie andererseits auch als Federelement derart, dass das Löseelement aus einer federbedingten Ruhestellung gegen Federkraft in seine Lösestellung bewegbar ist. Dadurch wird ein Eindringen von Schmutz in den Bereich des Halteelementes weitgehend ausgeschlossen. Gleichzeitig muss zum Lösen die Federkraft überwunden werden, was zu der angestrebten erhöhten Sicherheit gegen ungewolltes Lösen des Steckerteils führt. Bei einer bevorzugten Ausbildung des Löseelementes als Kunststoff-Formteil lassen sich dle Rastmittel auf einfache Weise und mit einem kostengünstigen Formwerkzeug herstellen. Dazu ist es besonders vorteilhaft, wenn die Rastmittel einerseits aus einer äußeren radialen Raststufe des Muffengehäuses und andererseits aus mindestens zwei insbesondere radialsymmetrisch über den Umfang verteilt angeordneten, das Muffengehäuse und dessen Raststufe axial übergrelfenden, radial federelastischen Rastarmen des Löseelementes bestehen. Die Rastarme mit an ihren freien Enden radial nach innen vorspringenden Rastnasen können auf einfache Weise geformt und auch - gegebenenfalls mit sogenannter "Zwangsentformung" unter elastischer Verformung der Rastarme - entformt werden.

Anhand von bevorzugten, in der Zeichnung veranschaulichten Ausführungsbeispielen soll die Erfindung genauer erläutert werden. Dabei zeigen:
- Fig. 1: einen Axialschnitt einer Steckkupplung in einer ersten Ausführungsform des Aufnahmeteils mit eingestecktem Steckerteil,
- Fig. 2: eine Darstellung analog zu Fig. 1 in einer zweiten Ausführungsform des Aufnahmeteils,
- Fig.3: eine gegenüber Fig. 2 vetkleinerte Seitenansicht des Löseelementes (Ansteht in Pfeilrichtung III gemäß Fig. 2)
- Fig. 4: einen Schnitt in der Ebene IV-IV gemäß Fig. 3,
- Fig. 5: eine Darstellung analog zu Fig. 3 in einer Ausführungsvariante des Löseelementes,
- Fig. 6: einen Schnitt in der Ebene VI - VI gemäß Fig. 5 (analog zu Fig. 4),
- Fig.7: eine gesonderte Schnittansicht entsprechend Fig. 1 bzw. 2 des Halteelementes,
- Fig. 8: eine Axial-Ansicht in Pfeilrichtung VIII gemäß Fig. 7,
- Fig. 9: einen Schnitt in der Ebene IX - IX gemäß Fig. 8,
- Fig. 10: eine gesonderte, vergrößerte Schnittansicht eines Einzelteils, d. h. einer Dichtungs-Abschlußbuchse, und
- Fig. 11: eine axiale Stimansicht in Pfeilrichtung XI gemäß Fig. 10.

In den verschiedenen Figuren der Zeichnungen sind gleiche Teile stets mit den gleichen Bezugszeichen versehen.

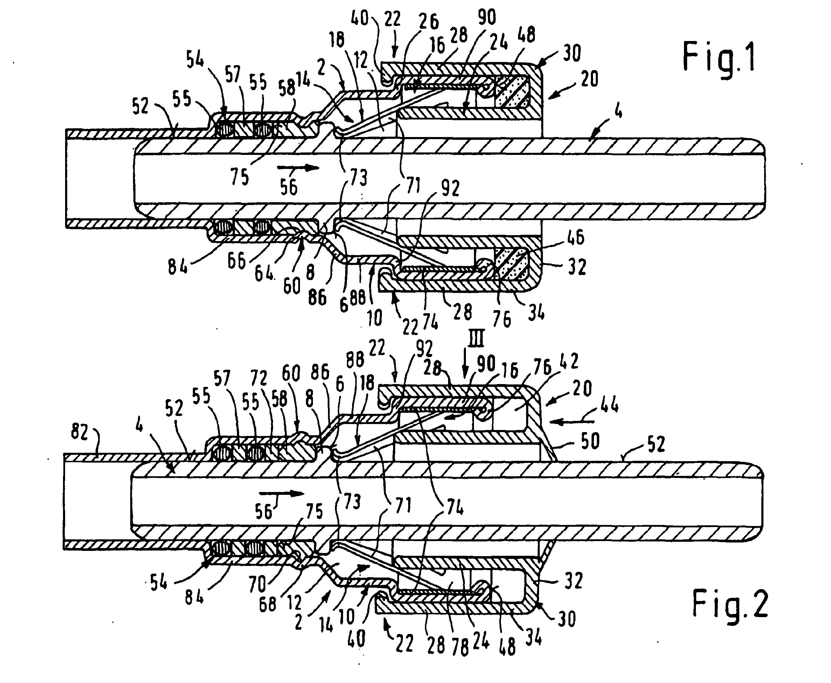

Wie sich zunächst aus Fig. 1 und 2 jeweils ergibt, besteht eine Steckkupplung aus einem Aufnahmeteil 2 und einem Steckerteil 4. Die Erfindung betrifft allerdings nur das Aufnahmeteil 2, während es sich bei dem Steckerteil 4 um eine normgemäße Ausführung (sog. SAE-Stecker) in Form eines Rohrstückes handelt, welches zur Bildung einer radialen Haltestufe 6 auf seinem Außenumfang einen Ringansatz 8 aufweist.

Das Aufnahmeteil 2 besteht aus einem Muffengehäuse 10 mit einer Einstecköffnung 12 für das Steckerteil 4 sowie mit einer Halteeinrichtung 14 zum lösbaren Fixieren des eingesteckten Steckerteils 4. Dazu weist die Halteeinrichtung 14 ein in dem Muffengehäuse 10 gelagertes Halteelement 16 auf, wobei dieses Halteelement 16 vergleiche dazu auch die gesonderten Darstellungen in Fig. 7 bis 9 - seinerseits radial elastisch verformbare Halteabschnitte 18 zum rastenden Hintergreifen der Haltestufe 6 des Steckerteils 4 besitzt. Das Aufnahmeteil 2 weist weiterhin ein Löseelement 20 auf, welches über Rastmittel 22 relativ zu dem Muffengehäuse 10 axial verschiebbar gehaltert ist. Dabei greift das Löseelement 20 mit einem inneren Löseabschnitt 24 in die Einstecköffnung 12 ein und wirkt hier zum Lösen des arretierten Steckerteils 4 gegen die Halteabschnitte 18 des Halteelementes 16.

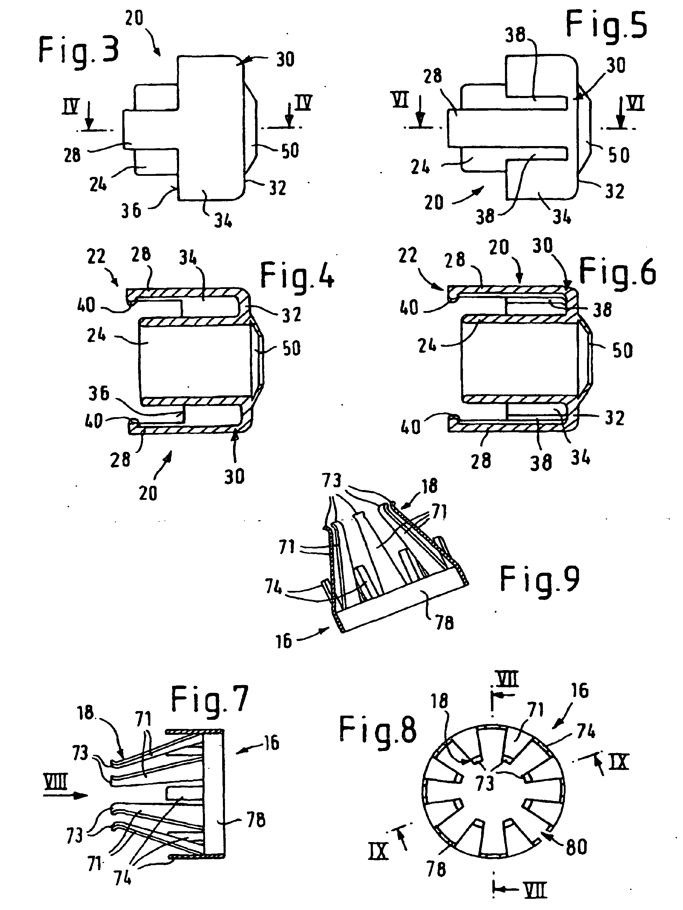

Gemäß Fig. 1 und 2 sind die das Löseelement 20 an dem Muffengehäuse 10 unverlierbar haltemden Rastmittel 22 erfindungsgemäß am äußeren Umfang des Muffengehäuses 10 vorgesehen. Dazu bestehen die Rastmittel 22 einerseits aus einer äußeren radialen Raststufe 26 des Muffengehäuses 10 und andererseits aus federelastischen Rastarmen 28 des Löseelementes 20. Bei der dargestellten Ausführungsform sind zwei diametral gegenüberliegende Rastarme 28 vorgesehen. Es kann sich aber auch um eine größere Anzahl von Rastarmen 28 in einer dann vorzugsweise radialsymmetrischen Anordnung handeln. Die Rastarme 28 übergreifen außen das Muffengehäuse 10 und die Raststufe 26 axial. Ergänzend wird auch auf die Figuren 3 bis 6 verwiesen. Demnach ist das Löseelement 20 bevorzugt als einstückiges Formteil aus Kunststoff gebildet. Der - vorzugsweise als hohlzylindrische Innenhülse ausgebildete - Löseabschnitt 24 ist daher mit den Rastarmen 28 einstückig über einen Übergangsabschnitt 30 verbunden. Dieser Übergangsabschnitt 30 besteht aus einem radial von dem hülsenförmigen, hohlzylindrischen Löseabschnitt 24 ausgehenden und im Wesentlichen ringscheibenförmigen Stimabschnitt 32, der vorzugsweise in einen hohlzylindrischen, den Löseabschnitt 24 koaxial mit radialem Abstand umschließenden Umfangsabschnitt 34 übergeht Der somit ebenfalls hülsenförmige Umfangsabschnitt 34 erstreckt sich in der dargestellten Ausführungsform axial etwa bis zur Hälfte der axialen Länge des hohlzylindrischen Löseabschnittes 24. Hierzu wird insbesondere auf die Fig. 4 und 6 hingewiesen.

In der in den Fig. 3 und 4 dargestellten Ausführungsform des Löseelementes 20 geht der Umfangsabschnitt 34 an seiner von dem Stirnabschnitt 32 wegweisenden Endkante 36 in die Rastarme 28 über. Somit weisen bei dieser Ausführung die Rastarme 28 eine relativ kurze axiale Länge auf, die etwas größer als die Hälfte der axialen Länge des Löseabschnittes 24 ist.

Bei der in den Fig. 5 und 6 veranschaulichten Ausführungsvariante weist der Umfangsabschnitt 34 jeweils beidseitig jedes Rastarmes 28 axiale Schlitze 38 derart auf, dass die Rastarme 28 bezüglich ihrer effektiven Federlänge in Richtung des Stimabschnittes 32 verlängert sind. Bei der dargestellten Ausführung gehen die Rastarme 28 praktisch direkt von dem Stimabschnitt 32 aus.

In beiden Fällen weisen die Rastarme 28 an ihren freien Enden radial nach innen vorspringende Rastnasen 40 auf, die formschlüssig oder zumindest kraftformschlüssig mit der äußeren Raststufe 26 des Muffengehäuses 10 zusammenwirken. Weiterhin überragen dabei die äußeren Rastarme 28 den Inneren Löseabschnitt 24 in axialer Richtung zumindest um die Länge der Rastnasen 40. was eine besonders einfache kunststofftechnische Formung ermöglicht.

Gemäß Fig. 2 ist im Bereich des Übergangsabschnittes 30 zwischen dem Löseelement 20 und dem Muffengehäuse 10 ein Freiraum 42 derart gebildet, dass die Axialbeweglichkelt des Löseelementes 20 gewährteistet ist. Dabei ist innerhalb des Freiraums 42 ein Federelement derart angeordnet, dass das Löseelement 20 aus einer federbedingten Ruhestellung (wie In Fig. 1 und 2 jeweils dargestellt), gegen Federkraft In Pfeilrichtung 44 in seine Lösestellung bewegbar ist. Weiterhin ist innerhalb des Freiraums 42 auch ein Dichtungselement Insbesondere zur Schmutzabdichtung gegen Eindringen von Schmutz, Feuchtigkeit und dergleichen In den Bereich des Halteelementes 16 angeordnet. Hierbei ist nach Fig. 1 vorgesehen, dass das Federelement und das Dichtungselement von einem einheitlichen Ringelement 46 aus einem elastisch verformbaren Material, vorzugsweise Moosgummi oder dergleichen, gebildet sind. Das Ringelement 46 füllt nahazu den gesamten Freiraum 42 aus, so dass es sich innen einerseits an dem Stirnabschnitt 32 des Löseelementes 20 und andererseits an einem mündungsseltigen Öffnungrand 48 des Muffengehäuses 10 abstützt.

In einer weiteren vorteilhaften Ausgestaltung gemäß Fig. 2 bis 6 ist vorgesehen, dass das Löseelement 20 eine radiale Dichtlippe 50 zur umfänglichen Auflage auf einer Umfangsfläche 52 des eingesteckten Steckerteils 4 aufweist. Dabei ist diese Dichtlippe 50 derart flexibel und elastisch ausgebildet, dass das Steckerteil mit seinem die Haltestufe 6 aufweisenden Ringansatz 8 die Dichtlippe 50 ungehindert passieren kann. Die Dichtlippe 50 ist vorzugsweise einstückig etwa im Übergangsbereich zwischen dem Löseabschnitt 24 und dem Stimabschnitt 32 angeformt.

Gemäß Fig. 1 und 2 ist weiterhin innerhalb des Muffengehäuses 10 eine Dichtungsanordnung 54 zum umfänglichen Abdichten auf dem Außenumfang 52 des eingesteckten Steckerteils 4 angeordnet, In den dargestellten Ausführungen besteht die Dichtungsanordnung 54 aus zwei Dichtringen 55 und einem zwischen diesen angeordneten Distanzring 57.

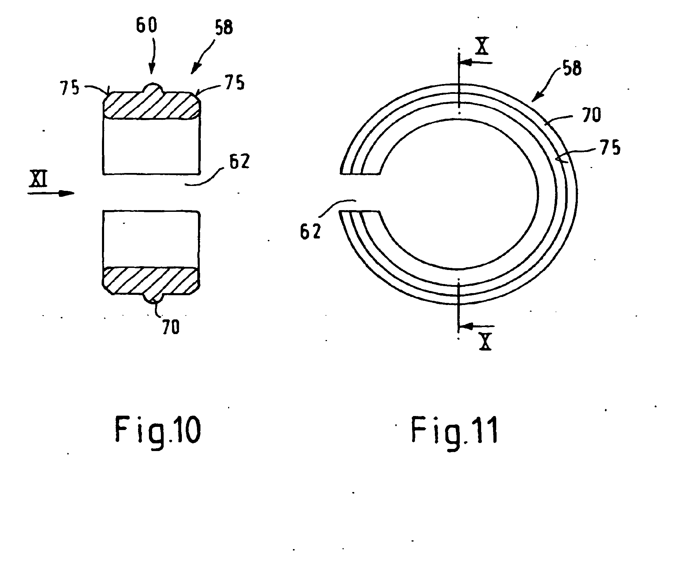

Diese Dichtungsanordnung 54 wird in dem Muffengehäuse 10 axial in Stecker-Entnahmerichtung (Pfeil 56) durch eine Abschlußbuchse 58 gehalten. Hierbei ist vorteilhafterweise vorgesehen, dass die Abschlußbuchse 58 unmittelbar im Muffengehäuse 10 über Arretiermittel 60 axial fixiert gehalten ist. Als Ametiermittel 60 ist bevorzugt eine Verrastung der Abschlußbuchse 58 im Muffengehäuse 10 vorgesehen. Dazu ist die Abschlußbuchse 58 - vergleiche dazu auch Fig. 10 und 11. - durch eine durchgehende Schlitzunterbrechung 62 radial elastisch verformbar ausgebildet, wobei am Außenumfang der Abschlußbuchse 58 sowie im Innenumfang des Muffengehäuses 10 korrespondierende radiale Rastmittel vorgesehen sind. Hierzu ist in der Ausführung nach Fig. 1 vorgesehen, dass die Rastmittel aus einer radial nach innen vorspringenden, wulstartigen Ringerhebung 64 des Muffengehäuses 10 und einer radialen Ringvertiefung 66 der Abschlußbuchse 58 bestehen. Bei dieser Ausführung muß aufgrund der radial nach innen ragenden Ringerhebung 64 auch der Distanzring 57 zum Einsetzen durch eine Schlitrunterbrechung radial elastisch verformbar ausgebildet sein.

Im Gegensatz dazu ist bei der in dieser Hinsicht zu bevorzugenden Ausführung nach Fig. 2 vorgesehen, dass die Arretiermittel 60 aus einer radial nach außen gerichteten Ringvertiefung 68 im Muffengehäuse 10 und einer radialen, wulstartigen Ringerhebung 70 der Abschlußbuchse 58 bestehen. Bei dieser Ausführung ist von Vorteil, dass sich innerhalb des Muffengehäuses 10 ein freier Querschnitt zum Einsetzen der Bestandteile der Dichtungsanordnung 54 ergibt, so auch des Distanzrings 57, der hierdurch ungeschlitzt ausgebildet sein kann. Hierdurch ist eine durchgehende Anlagefläche fürjeden Dichtring 55 vorhanden. Dabei ist es zudem vorteilhaft, wenn zwischen der Abschlußbuchse 58 und dem nächstliegenden Dichtring 55 ein weiterer stützring 72 angeordnet ist, der ebenfalls vorteilhafterweise ungeschlitzt, umfänglich durchgehend ausgeführt sein kann. Hierdurch wird auch auf dieser Seite der Dichtring 55 gegen axiales Eindrücken in die Schlitzunterbrechung 62 der Abschlußbuchse 58 geschützt.

Um das Einsetzen der Abschlußbuchse 58 in das Muffengehäuse 10 zu erleichtern, weist die Abschlußbuchse 58 zumindest einseitig eine Fase als Einführschräge 75 auf, die selbsttätig die zum Verrasten erforderliche, elastische Radialverformung bewirkt.

Im Gegensatz zu den Ausführungen nach Fig. 1 und 2 kann gemäß Fig. 10 und 11 mit Vorteil vorgesehen sein, dass die Abschlußbuchse 58 bezüglich der Lage ihrer Ringvertiefung 66 bzw. insbesondere ihrer Ringerhebung 70 in axialer Richtung symmetrisch ausgebildet ist. Dies erleichtert die Montage, da beim Einsetzen nicht auf die Orientierung geachtet zu werden braucht. Dabei ist natürlich auf beiden Seiten eine Fase 75 vorhanden.

Alternativ zu den dargestellten Ausführungen mit Verrastung kann auch eine direkte unlösbare Halterung der Abschlußbuchse 58 im Muffengehäuse 10 vorgesehen sein. Dazu ist die - bevorzugt mit der Ringvertiefung 66 entsprechend Fig. 1 versehene - Abschlußbuchse 58 dann ungeschlitzt und radial starr, formstabil ausgeführt, und die Halterung erfolgt dann nach dem Einsetzen durch eine radiale, plastische Verformung des in diesem Bereich ursprünglich zylindrischen Muffengehäuses 10.

Durch ihre bevorzugte Fixierung bildet die Abschlußbuchse 58 vorteilhafterweise auch einen axialen Anschlag (Einsteckbegrenzung) für das Steckerteil 4 bzw. dessen Ringansatz 8. Dabei kann der Ringansatz 8 im Wesentlichen spielfrei zwischen der Abschlußbuchse 58 und den Halteabschnitten 18 des Halteelementes 16 gehalten sein.

Wie sich weiterhin aus den Fig: 7 bis 9 ergibt, ist das Halteelement 16 bevorzugt als Stanzbiegeteil aus Federstahlblech ausgebildet. Die Halteabschrütte 18 sind als widerhakenartig axial in Stecker-Einsteckrichtung (Pfeil 44 in Fig. 2) und schräg radial nach innen ragende Federarme 71 ausgebildet, die an ihren freien Enden nach außen um mindestens 90° umgebogene Anlageabschnitte 73 aufweisen.

Bei der dargestellten Ausführung sind acht radialsymmetrisch angeordnete Federarme 71 bzw. Halteabschnitte 18 vorgesehen. Es ergibt sich somit eine kronenartige Gestalt. Weiterhin weist das Halteelement 16 jeweils im Bereich zwischen den in Umfangsrichtung benachbarten Halteabschnitten 18 Fixierabschnitte 74 auf, die axial und radial fixiert im Muffengehäuse 10 sitzen. Gemäß Fig. 1 und 2 stützen sich die Fixierabschnitte 74 in axialer Richtung einerseits an einer im Bereich der Raststufe 26 gebildeten, radialen Innenfläche ab und andererseits an einem inneren Ringansatz 76 im Bereich des Öffnungsrandes 48. Vorzugsweise ist das Muffengehäuse 10 einteilig aus einer Metall-Ronde durch ein Mehrstufen-Tiefziehverfahren hergestellt, es kann aber auch aus einem umgeformten Rohrstück aus Metall gebildet sein. Dies kann durch eine spezielle Stauch-Umformung erreicht werden. Bei beiden Ausführungen kann der mündungsseitige Ringansatz 76 durch Einrollen gebildet sein.

Die Halteabschnitte 18 und die Faxierabschnitte 74 des Halteelementes 16 gehen von einem im Wesentlichen ringförmigen Basisabschnitt 78 aus, der gemäß Fig. 8 an einer Umfangsstelle eine durchgehende Schlitzunterbrechung 80 aufweist. Dadurch ist auch das Halteelement 16 radial elastisch verformbar, um es in das Muffengehäuse 10 einsetzen zu können.

Wie sich noch aus Fig. 1 und 2 ergibt weist das tiefgezogene bzw. umgeformte Muffengehäuse 10 einen ersten Abschnitt 82.mit einem etwa dem Außenquerschnitt des Steckerteils 4 entsprechenden Innenquerschnitt, einen demgegenüber radial erweiterten zweiten Abschnitt 84 zur Aufnahme der Dichtungsanordnung 54, einen sich anschließenden, konisch erweiterten dritten Abschnitt 86, einen sich anschließenden ersten zylindrischen Abschnitt 88 sowie einen demgegenüber erweiterten zweiten zylindrischen Abschnitt 90 auf. Zwischen den zylindrischen Abschnitten 88 und 90 ist ein radialer Abschnitt 92 angeordnet, der einerseits außenseitig die Raststufe 26 und andererseits innenseitig den Anschlag für die Fixierabschnitte 74 des Halteelementes 16 bildet. Endseitig bzw. mündungsseitig geht der zweite zylindrische Abschnitt 90 in den eingerollten Ringansatz 76 über.

## Patentansprüche

1. Aufnahmeteil (2) einer Fluid-Steckkupplung, bestehend aus einem Muffengehäuse (10) mit einer Einstecköffnung (12) für ein Steckerteil (4) und mit einer Halteeinrichtung (14) zum lösbaren Fixieren des eingesteckten Steckerteils (4), wobei die Halteeinrichtung (14) ein in dem Muffengehäuse (10) gelagertes Halteelement (16) mit radial elastisch verformbaren Halteabschnitten (18) zum rastenden Hintergreifen einer radialen Haltestufe (6) des Steckerteils (4) sowie ein über Rastmittel (22) relativ zu dem Muffengehäuse (10) axial verschiebbar gehaltertes Löseelement (20) aufweist, wobei das Löseelement (20) mit einem inneren Löseabschnitt (24) in die Einstecköffnung (12) eingreift und zum Lösen gegen die Halteabschnitte (18) des Halteelementes (16) wirkt, und wobei die das Löseelement (20) haltemden Rastmittel (22) am äußeren Umfang des Muffengehäuses (10) vorgesehen sind, **dadurch gekennzeichnet, dass** innerhalb eines zwischen dem Löseelement (20) und dem Muffengehäuse (10) gebildeten, die Axialbewegilchkeit des Löseelementes (20) gewährleistenden Freiraums (42) ein Dichtungselement zur äußeren Schmutzabdichtung sowie ein Federelement derart angeordnet sind, dass das Löseelement (20) aus einer federbedingten Ruhestellung gegen Federkraft in seine Lösestellung bewegbar ist, wobei das Federelement und das Dichtungselement von einem einheitlichen Ringelement (46) aus einem elastischen Material, wie Moosgummi oder dergleichen, gebildet sind.

2. Aufnahmeteil nach Anspruch 1,
**dadurch gekennzeichnet, dass** die das Löseelement (20) haltemden Rastmittel (22) einerseits aus einer äußeren radialen Raststufe (26) des Muffengehäuses (10) und andererseits aus mindestens zwei insbesondere radialsymmetrisch über den Umfang verteilt angeordneten, das Muffengehäuse (10) und die Raststufe (26) axial übergreifenden, radial federelastischen Rastarmen (28) des Löseelementes (20) bestehen.

3. Aufnahmeteil nach Anspruch 2,
**dadurch gekennzeichnet, dass** der - vorzugsweise als hohlzylindrische Innenhülse ausgebildete - Löseabschnitt (24) des Löseelementes (20) mit den Rastarmen (28) über einen Übergangsabschnitt (30) insbesondere einstückig verbunden ist.

4. Aufnahmeteil nach Anspruch 3,
**dadurch gekennzeichnet, dass** der Übergangsabschnitt (30) aus einem radial von dem Löseabschnitt (24) ausgehenden und im Wesentlichen ringscheibenförmigen Stimabschnitt (32) besteht, der vorzugsweise in einen hohlzylindrischen, den Löseabschnitt (24) koaxial mit radialem Abstand umschließenden Umfangsabschnitt (34) übergeht.

5. Aufnahmeteil nach Anspruch 4,
**dadurch gekennzeichnet, dass** der Umfangsabschnitt (34) an seiner von dem Stimabschnitt (32) wegweisenden Endkante (36) in die Rastarme (28) übergeht.

6. Aufnahmeteil nach Anspruch 4,
**dadurch gekennzeichnet, dass** der Umfangsabschnitt (34) jeweils beidseitig jedes Rastarmes (28) axiale Schlitze (38) derart aufweist, dass die Rastarme (28) in Richtung des Stimabschnittes (32) verlängert sind.

7. Aufnahmeteil nach einem der Ansprüche 2 bis 6,
**dadurch gekennzeichnet, dass** die Rastarme (28) an ihren freien Enden radial nach innen vorspringende Rastnasen (40) zum formschlüssigen oder zumindest kraftformschlüssig Zusammenwirken mit der äußeren Raststufe (26) des Muffengehäuses (10) aufweisen.

8. Aufnahmeteil nach einem der Ansprüche 2 bis 7,
**dadurch gekennzeichnet, dass** die äußeren Rastarme (28) den inneren Löseabschnitt (24) axial überragen.

9. Aufnahmeteil nach einem der Ansprüche 3 bis 8,
**dadurch gekennzeichnet, dass** der das Federelement aufnehmende Freiraum (42) im Bereich des Übergangsabschnittes (30) zwischen dem Löseelement (20) und dem Muffengehäuse (10) gebildet ist.

10. Aufnahmeteil nach einem der Ansprüche 1 bis 9,
**dadurch gekennzeichnet, dass** das Löseelement (20) eine radiale Dichtlippe (50) zur umfänglichen Auflage auf einer Umfangsfläche (52) des eingesteckten Steckerteils (4) aufweist.

11. Aufnahmeteil nach einem der Ansprüche 1 bis 10,
**dadurch gekennzeichnet, dass** innerhalb des Muffengehäuses (10) eine Dichtungsanordnung (54) zum umfänglichen Abdichten des eingesteckten Steckerteils (4) angeordnet ist, wobei die Dichtungsanordnung (54) axial in Stecker-Entnahmerichtung (56) durch eine Abschlußbuchse (58) gehalten wird, wobei die Abschlußbuchse (58) unmittelbar im Muffengehäuse (10) über Arretiermittel (60) axial fixiert gehalten ist.

12. Aufnahmeteil nach Anspruch 11,
**dadurch gekennzeichnet, dass** als Arrtiermittel (60) eine Verrastung der Abschtußbuchse (58) im Muffengehäuse (10) vorgesehen ist.

13. Aufnahmeteil nach Anspruch 12,
**dadurch gekennzeichnet, dass** die Abschlußbuchse (58) durch eine durchgehende Schlilzunterbnachung (62) radial elastisch verformbar ausgebildet ist, wobei am Außenumfang der Abschlußbuchse (58) und im Innenumfang des Muffengehäuses (10) korrespondierende radiale Rastmittel gebildet sind.

14. Aufnahmeteil nach Anspruch 12 oder 13,
**dadurch gekennzeichnet, dass** die Arretiermittel (60) aus einer radial nach innen vorspringenden Ringerhebung (64) des Muffengehäuses (10) und einer radialen Ringvertiefung (66) der Abschlußbuchse (58) bestehen.

15. Aufnahmeteil nach Anspruch 12 oder 13,
**dadurch gekennzeichnet, dass** die Arretiermittel (60) aus einer radial nach außen gerichteten Ringvertiefung (68) im Muffengehäuse (10) und einer radialen Ringerhebung (70) der Abschlußbuchse (58) bestehen.

16. Aufnahmeteil nach einem der Ansprüche 11 bis 15,
**dadurch gekennzeichnet, dass** die Dichtungsanordnung (54) zwei über einen Distanzring (57) beabstandete Dichtringe (55) aufweist.

17. Aufnahmeteil nach einem der Ansprüche 11 bis 16,
**dadurch gekennzeichnet, dass** zwischen der Abschlußbuchse (58) und dem Dichtring (55) ein - insbesondere ungeschlitzter, umfänglich durchgehender - Stützring (72) angeordnet ist.

18. Aufnahmeteil nach einem der Ansprüche 1 bis 17,
**dadurch gekennzeichnet, dass** dasHalteelement(16)als Stanzbiegeteil aus Federstahlblech ausgebildet ist, wobei die Halteabschnitte (18) als widerhakenartig axial in Stecker-Einsteckrichtung (44) und schräg radial nach innen ragende Federarme (71) ausgebildet sind.

19. Aufnahmeteil nach einem der Ansprüche 1 bis 18,
**dadurch gekennzeichnet, dass** das Halteelement (16) jeweils im Bereich zwischen den in Umfangsrichtung benachbarten Halteabschnitten (18) Fixierabschnitte (74) aufweist, die axial und radial fixiert im Muffengehäuse (10) sitzen.

20. Aufnahmeteil nach Anspruch 19,
**dadurch gekennzeichnet, dass** die Halteabschnitte (18) und die Fixierabschnitte (74) von einem ringförmigen, eine Schlitzunterbrechung (80) aufweisenden Basisabschnitt (78) ausgehen.

21. Aufnahmeteil nach einem der Ansprüche 1 bis 20,
**dadurch gekennzeichnet, dass** das Muffengehäuse (10) einteilig aus einem umgeformten Rohrstück oder einer tiefgezogenen Ronde aus Metall gebildet ist.

## Claims

1. Receiving part (2) of a fluid plug-in coupling, comprising a socket housing (10) having a plug-in opening (12) for a plug part (4) and having a retaining device (14) for releasably fixing the plugged-in plug part (4), the retaining device (14) having a retaining element (16) which is mounted in the socket housing (10) and has radially elastically deformable retaining sections (18) for latching engagement behind a radial retaining step (6) of the plug part (4), and a release element (20) which is secured in an axially displaceable manner relative to the socket housing (10) via latching means (22), the release element (20) engaging by means of an inner release section (24) in the plug-in opening (12) and, for release purposes, acting against the retaining sections (18) of the retaining element (16), and the latching means (22) securing the release element (20) being provided on the outer circumference of the socket housing (10), **characterised in that** a sealing element for sealing against dirt from outside and a spring element are arranged within a clearance (42), formed between the release element (20) and the socket housing (10) and ensuring the axial movability of the release element (20), in such a manner that the release element (20) can be moved out of a spring-induced inoperative position into a release position counter to spring force, the spring element and the sealing element being formed from a single annular element (46) consisting of an elastic material, such as cellular rubber or the like.

2. Receiving part according to Claim 1, **characterised in that** the latching means (22) securing the release element (20) comprise, on the one hand, an outer radial latching step (26) of the socket housing (10) and, on the other hand, at least two in particular radially resilient latching arms (28) of the release element (20), which latching arms are distributed in a radially symmetrical manner over the circumference and engage axially over the socket housing (10) and the latching step (26) .

3. Receiving part according to Claim 2, **characterised in that** the release section (24) - preferably designed as a hollow-cylindrical inner sleeve - of the release element (20) is connected in particular as a single piece to the latching arms (28) via a transition section (30).

4. Receiving part according to Claim 3, **characterised in that** the transition section (30) comprises an end section (32) which emerges radially from the release section (24) and is essentially in the shape of an annular disc and preferably merges into a hollow-cylindrical circumferential section (34) which coaxially surrounds the release section (24) at a radial distance.

5. Receiving part according to Claim 4, **characterised in that** the circumferential section (34) merges at its end edge (36), which points away from the end section (32), into the latching arms (28).

6. Receiving part according to Claim 4, **characterised in that** the circumferential section (34) has axial slots (38) in each case on both sides of each latching arm (28) in such a manner that the latching arms (28) are extended in the direction of the end section (32).

7. Receiving part according to one of Claims 2 to 6, **characterised in that** the latching arms (28) have, at their free ends, radially inwardly projecting latching lugs (40) for interacting with the outer latching step (26) of the socket housing (10) in a form-fitting manner or at least a frictional manner.

8. Receiving part according to one of Claims 2 to 7, **characterised in that** the outer latching arms (28) protrude axially over the inner release section (24) .

9. Receiving part according to one of Claims 3 to 8, **characterised in that** the clearance (42) receiving the spring element is formed in the region of the transition section (30) between the release element (20) and the socket housing (10).

10. Receiving part according to one of Claims 1 to 9, **characterised in that** the release element (20) has a radial sealing lip (50) for circumferentially resting on a circumferential surface (52) of the plugged-in plug part (4).

11. Receiving part according to one of Claims 1 to 10, **characterised in that** a sealing arrangement (54) for circumferentially sealing the plugged-in plug part (4) is arranged within the socket housing (10), the sealing arrangement (54) being retained axially in the plug removal direction (56) by means of a closing bushing (58), the closing bushing (58) being retained in an axially fixed manner directly in the socket housing (10) via locking means (60).

12. Receiving part according to Claim 11, **characterised in that** a latching of the closing bushing (58) in the socket housing (10) is provided as locking means (60) .

13. Receiving part according to Claim 12, **characterised in that** the closing bushing (58) is designed to be deformable radially elastically by means of a continuous slot interruption (62), corresponding radial latching means being formed on the outer circumference of the closing bushing (58) and in the inner circumference of the socket housing (10).

14. Receiving part according to Claim 12 or 13, **characterised in that** the locking means (60) comprise a radially inwardly projecting annular elevation (64) on the socket housing (10) and a radial annular depression (66) in the closing bushing (58) .

15. Receiving part according to Claim 12 or 13, **characterised in that** the locking means (60) comprise a radially outwardly directed annular depression (68) in the socket housing (10) and a radial annular elevation (70) on the closing bushing (58) .

16. Receiving part according to one of Claims 11 to 15, **characterised in that** the sealing arrangement (54) has two sealing rings (55) which are spaced apart via a spacer ring (57).

17. Receiving part according to one of Claims 11 to 16, **characterised in that** an - in particular unslotted, circumferentially continuous - supporting ring (72) is arranged between the closing bushing (58) and the sealing ring (55).

18. Receiving part according to one of Claims 1 to 17, **characterised in that** the retaining element (16) is formed as a stamped and bent part of spring steel sheet, the retaining sections (18) being designed as spring arms (71) which project axially in the plug-in direction (44) of the plug in the manner of barbs and obliquely radially inwards.

19. Receiving part according to one of Claims 1 to 18, **characterised in that** the retaining element (16) has, in each case in the region between the adjacent retaining sections (18) in the circumferential direction, fixing sections (74) which sit in the socket housing (10) in a manner such that they are fixed axially and radially.

20. Receiving part according to Claim 19, **characterised in that** the retaining sections (18) and the fixing sections (74) emerge from an annular base section (78) having a slot interruption (80).

21. Receiving part according to one of Claims 1 to 20, **characterised in that** the socket housing (10) is formed as a single part from a formed section of pipe or deep-drawn blank made of metal.

## Revendications

1. Partie réceptrice (2) d'un raccord de fluide enfichable, comprenant un boîtier de manchon (10) avec une ouverture d'enfichage (12) pour une partie de fiche (4) et avec un système de retenue (14) pour la fixation amovible de la partie de fiche (4) enfichable, le système de retenue (14) présentant un élément de retenue (16) logé dans le boîtier de manchon (10) avec des parties de retenue (18) déformables radialement de façon élastique pour la saisie à l'arrière par encliquetage d'un niveau de retenue (6) radial de la partie de fiche (4) et un élément de desserrage (20) maintenu de façon coulissante axialement par des moyens d'encliquetage (22) par rapport au boîtier de manchon (10), l'élément de desserrage (20) s'engageant avec une partie de desserrage (24) intérieure dans l'ouverture d'enfichage (12) et agissant pour le desserrage contre les parties de retenue (18) de l'élément de retenue (16), et les moyens d'encliquetage (22) retenant l'élément de desserrage (20) étant prévus sur le pourtour extérieur du boîtier de manchon (10), **caractérisée en ce qu'**à l'intérieur d'une cavité (42) formée entre l'élément de desserrage (20) et le boîtier de manchon (10) et garantissant la mobilité axiale de l'élément de desserrage (20) sont disposés un élément d'étanchéité pour l'étanchéité extérieure contre la poussière et un élément de ressort de telle sorte que l'élément de desserrage (20) peut être déplacé à partir d'une position de repos conditionnée par le ressort contre la force de ressort dans sa position de desserrage, l'élément de ressort et l'élément d'étanchéité étant formés par un élément annulaire (46) homogène à base d'un matériau élastique comme du caoutchouc mousse ou similaire.

2. Partie réceptrice selon la revendication 1,
**caractérisée en ce que** les moyens d'encliquetage (22) maintenant l'élément de desserrage (20) se composent d'une part d'un niveau d'encliquetage (26) radial extérieur du boîtier de manchon (10) et d'autre part d'au moins deux bras d'encliquetage (28) disposés et répartis sur le pourtour en particulier avec une symétrie radiale, recouvrant axialement le boîtier de manchon (10) et le niveau d'encliquetage (26) et élastiques comme un ressort radialement, de l'élément de desserrage (20).

3. Partie réceptrice selon la revendication 2,
**caractérisée en ce que** la partie de desserrage (24), conçue de préférence comme un manchon intérieur cylindrique creux, de l'élément de desserrage (20) est relié en particulier d'une seule pièce aux bras d'encliquetage (28) au moyen d'une partie de transition (30).

4. Partie réceptrice selon la revendication 3,
**caractérisée en ce que** la partie de transition (30) est composée d'une partie frontale (32) partant radialement de la partie de desserrage (24) et essentiellement en forme de disque annulaire, qui se place de préférence dans une partie périphérique (34) cylindrique creuse et entourant la partie de desserrage (24) sur un plan coaxial à une distance radiale.

5. Partie réceptrice selon la revendication 4,
**caractérisée en ce que** la partie périphérique (34) fait place sur son arête d'extrémité (36) partant de la partie frontale (32) aux bras d'encliquetage (28).

6. Partie réceptrice selon la revendication 4,
**caractérisée en ce que** la partie périphérique (34) présente des fentes (38) axiales respectivement des deux côtés de chaque bras d'encliquetage (28), de telle sorte que les bras d'encliquetage (28) sont prolongés en direction de la partie frontale (32).

7. Partie réceptrice selon l'une quelconque des revendications 2 à 6,
**caractérisée en ce que** les bras d'encliquetage (28) présentent sur leurs extrémités libres des nez d'encliquetage (40) dépassant radialement vers l'intérieur pour l'interaction par complémentarité de forme ou tout du moins par complémentarité de forme et adhérence avec le niveau d'encliquetage (26) extérieur du boîtier de manchon (10).

8. Partie réceptrice selon l'une quelconque des revendications 2 à 7,
**caractérisée en ce que** les bras d'encliquetage (28) extérieurs dépassent axialement de la partie de desserrage (24) intérieure.

9. Partie réceptrice selon l'une quelconque des revendications 3 à 8,
**caractérisée en ce que** la cavité (42) recevant l'élément de ressort est formée dans la zone de la partie de transition (30) entre l'élément de desserrage (20) et le boîtier de manchon (10).

10. Partie réceptrice selon l'une quelconque des revendications 1 à 9,
**caractérisée en ce que** l'élément de desserrage (20) présente une lèvre d'étanchéité (50) radiale pour le support périphérique sur une surface périphérique (52) de la partie de fiche (4) enfichée.

11. Partie réceptrice selon l'une quelconque des revendications 1 à 10,
**caractérisée en ce que** à l'intérieur du boîtier de manchon (10) est disposé un dispositif d'étanchéité (54) pour l'étanchéité périphérique de la partie de fiche (4) enfichée, le dispositif d'étanchéité (54) étant maintenu axialement dans le sens de prélèvement de la fiche (56) par une douille de terminaison (58), la douille de terminaison (58) étant maintenue fixée axialement directement dans le boîtier de manchon (10) par des moyens d'arrêt (60).

12. Partie réceptrice selon la revendication 11,
**caractérisée en ce qu'**un encliquetage de la douille de terminaison (58) est prévu dans le boîtier de manchon (10) comme moyen d'arrêt (60).

13. Partie réceptrice selon la revendication 12,
**caractérisée en ce que** la douille de terminaison (58) est réalisée de façon déformable élastiquement au plan radial par une interruption de fente (62) continue, des moyens d'encliquetage radiaux correspondants étant formés sur le pourtour extérieur de la douille de terminaison (58) et dans le pourtour intérieur du boîtier de manchon (10).

14. Partie réceptrice selon la revendication 12 ou 13,
**caractérisée en ce que** les moyens d'arrêt (60) se composent d'une élévation annulaire (64), faisant saillie radialement vers l'intérieur, du boîtier de manchon (10) et d'une cavité annulaire (66) radiale de la douille de terminaison (58).

15. Partie réceptrice selon la revendication 12 ou 13,
**caractérisée en ce que** les moyens d'arrêt (60) se composent d'une cavité annulaire (68) orientée radialement vers l'extérieur dans le boîtier de manchon (10) et d'une élévation annulaire (70) radiale de la douille de terminaison (58).

16. Partie réceptrice selon l'une quelconque des revendications 11 à 15,
**caractérisée en ce que** le dispositif d'étanchéité (54) présente deux bagues d'étanchéité (55) espacées par une bague d'espacement (57).

17. Partie réceptrice selon l'une quelconque des revendications 11 à 16,
**caractérisée en ce qu'**une bague d'appui (72), en particulier non fendue et continue sur le pourtour, est disposée entre la douille de terminaison (58) et la bague d'étanchéité (55).

18. Partie réceptrice selon l'une quelconque des revendications 1 à 17,
**caractérisée en ce que** l'élément de retenue (16) est conçu comme une pièce pliée et découpée à base de tôle d'acier à ressort, les parties de retenue (18) étant conçues comme des bras à ressort (71) dépassant axialement à la façon d'un ardillon dans le sens d'enfichage de la fiche (44) et dépassant en biais radialement vers l'intérieur.

19. Partie réceptrice selon l'une quelconque des revendications 1 à 18,
**caractérisée en ce que** l'élément de retenue (16) présente respectivement dans la zone située entre les parties de retenue (18) voisines dans le sens périphérique des parties de fixation (74) qui sont situées axialement et radialement fixées dans le boîtier de manchon (10).

20. Partie réceptrice selon la revendication 19,
**caractérisée en ce que** les parties de retenue (18) et les parties de fixation (74) partent d'une partie de base (78) de forme annulaire et présentant une interruption de fente (80).

21. Partie réceptrice selon l'une quelconque des revendications 1 à 20,
**caractérisée en ce que** le boîtier de manchon (10) est formé d'une seule pièce à partir d'un bout de tuyau formé ou d'un rond embouti profond en métal.
